(19) Europäisches Patentamt
European Patent Office
Office européen des brevets

(11) EP 2 822 132 B1

# (12) EUROPEAN PATENT SPECIFICATION

(45) Date of publication and mention of the grant of the patent:
**04.07.2018 Bulletin 2018/27**

(21) Application number: **12869900.6**

(22) Date of filing: **09.10.2012**

(51) Int Cl.:
***H02J 1/00*** *(2006.01)* ***B60L 3/00*** *(2006.01)*
***H01M 10/48*** *(2006.01)* ***H02H 9/02*** *(2006.01)*
***H02M 7/48*** *(2007.01)* ***B60L 11/18*** *(2006.01)*
***H02M 1/36*** *(2007.01)*

(86) International application number:
**PCT/JP2012/076120**

(87) International publication number:
**WO 2013/128700 (06.09.2013 Gazette 2013/36)**

## (54) POWER SUPPLY APPARATUS

STROMVERSORGUNGSGERÄT

APPAREIL D'ALIMENTATION EN ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2012 JP 2012041839**

(43) Date of publication of application:
**07.01.2015 Bulletin 2015/02**

(73) Proprietor: **Toyota Shatai Kabushiki Kaisha**
**Kariya-shi, Aichi 448-8666 (JP)**

(72) Inventor: **UNO, Kousuke**
**Kariya-shi**
**Aichi 448-8666 (JP)**

(74) Representative: **Appleyard Lees IP LLP**
**15 Clare Road**
**Halifax HX1 2HY (GB)**

(56) References cited:
**JP-A- 2002 281 602**
**JP-A- 2002 308 026**
**JP-A- 2006 280 109**
**JP-A- 2007 068 338**
**JP-A- 2008 193 846**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 822 132 B1

**Description**

TECHNICAL FIELD

The present invention relates to a power supply device including a precharge circuit for precharging a smoothing capacitor.

BACKGROUND ART

As shown in Fig. 10, an inverter 110 of an electrical vehicle includes a smoothing capacitor 120 between the input-side terminals. Further provided between the input-side terminals is a voltage sensor 190 for controlling the inverter and detecting an abnormality in the circuit. The voltage sensor 190 is connected in parallel to the smoothing capacitor 120. The smoothing capacitor 120 is a high-capacity charge capacitor. The smoothing capacitor 120 stabilizes the operation of the inverter 110 by smoothing fluctuations in voltage. Getting the electrical vehicle moving causes a main switch (not illustrated) to be turned on. Then, in starting an inverter operation, a control circuit 200 closes a relay 130 and charges the smoothing capacitor 120. In this case, charging the smoothing capacitor 120 directly with an assembled battery causes a high current to flow through the circuit, and may therefore cause damage to the contact of a main relay section 140. In order to prevent such damage, the control circuit 200 closes a precharge relay 150 first, and then precharges the smoothing capacitor 120 while limiting electrical currents with a precharge resistor 160. Upon completion of the precharge, the control circuit 200 closes the main relay section 140 of the relay 130, thereby preventing damage to the contact of the main relay section 140.
There are three types of method of precharging operation for charging a smoothing capacitor.

(1) The control circuit controls the relay to supply a precharge current to the smoothing capacitor 120 only for a predetermined period of time (first conventional technique).

(2) As shown in Fig. 10, a current sensor 210 for detecting a precharge current is provided on the circuit. The control section 200 monitors a precharge current until the precharge current becomes lower, and controls the relay (Patent Document 1, Patent Document 2, second conventional technique).

(3) A voltage sensor 220 for detecting the voltage between a direct-current circuit (precharge circuit) 180, which includes a contactor 170 of the precharge relay 150 and a precharge resistor 160, and the anode of a battery 100 is provided on the circuit. Then, the precharge is performed until the difference between the value of a voltage before the precharge and the value of a voltage after the precharge becomes smaller (method of Patent Document 3, third conventional technique).

However, with the first conventional technique, there may be a problem that, in the case of a rise in battery voltage, turning on the main relay section 140 with the smoothing capacitor 120 insufficiently precharged may cause a high current to flow to cause damage to the contact of the main relay section 140. Further, there is also a problem that setting the precharge time on the basis of the highest voltage of the battery causes the precharge time to become longer when the battery voltage is a normal voltage.
The second conventional technique requires the current sensor 210, thus incurring a rise in cost. Further, the third conventional technique requires the voltage sensor 220, which is separate from the voltage sensor 190, in order to control the inverter and detect an abnormality, thus incurring a rise in cost.
These problems are not confined to a vehicular inverter connected to a power supply device, but may also occur in an inverter, a converter, or the like that is used in other applications.

PRIOR ART DOCUMENT

Patent Documents

Patent Document 1: Japanese Laid-Open Patent Publication No. 10-304501
Patent Document 2: Japanese Patent No. 3736933
Patent Document 3: Japanese Laid-Open Patent Publication No. 2008-193846

## SUMMARY OF THE INVENTION

### Problems that the Invention is to Solve

The present invention has as an object to provide a power supply device that does not require another component or circuit for precharging and that makes it possible to perform precharge in the shortest period of time even if there is a change in battery voltage.

### Means for Solving the Problems

In order to attain the foregoing object, a first aspect of the present invention provides a power supply device including a smoothing capacitor, a load connected in parallel to the smoothing capacitor, a battery that is arranged to supply direct-current power to the load, a main relay section arranged between the battery and the smoothing capacitor, a precharge circuit connected in parallel to the main relay section, the precharge circuit including a series circuit composed of a precharge resistor and a precharge relay section, and a control section that is arranged to execute on-off control of the main relay section and the precharge relay section. The power supply device includes: a voltage sensor that is arranged to detect a capacitor voltage of the smoothing capacitor during precharge that is performed with the main relay section turned off and the precharge relay section turned on; a battery voltage calculation section that is arranged to calculate a battery voltage on a basis of the capacitor voltage, a value of resistance of the precharge resistor and a value of capacitance of the smoothing capacitor; and a precharge completion determination section that, on a basis of a changing state quantity of the battery voltage, is arranged to make a precharge completion determination. The control section is arranged to turn off the precharge relay section in accordance with the precharge completion determination made by the precharge completion determination section.

This configuration does not require another component or circuit for precharging. Further, this configuration makes it possible to perform precharge in the shortest period of time even if there is a change in battery voltage.

The power supply device is preferably configured such that: the precharge completion determination section is arranged to monitor, as the changing state quantity of the battery voltage, a potential difference between a latest battery voltage calculated and a latest capacitor voltage detected by the voltage sensor; and the precharge completion determination section is arranged to determine whether or not the potential difference is not greater than a first precharge completion determination threshold value.

According to this configuration, the control section monitors, as the changing state quantity of the battery voltage, a potential difference between a latest battery voltage calculated and a latest capacitor voltage detected by the voltage sensor. Moreover, the control section determines whether or not the potential difference is not greater than a first precharge completion determination threshold value. This allows the control section to appropriately determine the completion of the precharge on the basis of the latest state of the battery voltage.

The power supply device is preferably configured such that the precharge circuit includes a PTC thermistor, the power supply device further comprises a resistance value calculation section that is arranged to calculate a value of resistance of the PTC thermistor on a basis of a capacitor voltage detected by the voltage sensor, the battery voltage calculation section is arranged to calculate the battery voltage on a basis of a precharge resistor including the value of resistance of the PTC thermistor and the capacitor voltage detected by the voltage sensor.

According to this configuration, turning on and off the precharge relay section repeatedly causes a precharge current to flow frequently, so that there is a rise in temperature of the PTC thermistor. This causes an increase in resistance of the PTC thermistor, and the increase in turn makes the electric current lower, so that overheating of the PTC thermistor is suppressed. This prevents damage to the precharge resistor of the precharge circuit. Further, the precharge can be done even if the PTC thermistor has a high temperature.

The power supply device is preferably configured such that: the precharge resistor is a PTC thermistor; the battery voltage calculation section is arranged to calculate the battery voltage on a basis of a value of resistance of the PTC thermistor at a Curie temperature and a capacitor voltage detected by the voltage sensor; the precharge completion determination section is arranged to calculate, as the changing state quantity, either a difference obtained by subtracting a present value of the battery voltage as calculated by the battery voltage calculation section from a previous value of the battery voltage as calculated by the battery voltage calculation section or a ratio between the previous value and the present value, and to make the precharge completion determination in a case where the precharge completion determination section determines, on a basis of a result of a comparison between the changing state quantity and a second precharge completion determination threshold value derived from the Curie temperature, that a temperature of the PTC thermistor is not lower than the Curie temperature; the control section is arranged to turn off the precharge relay section in accordance with the precharge completion determination; and in a case where the precharge completion determination is not made and a period of time having elapsed since a start of the precharge is longer than a preset precharge time, the control section is arranged to on the main relay section and turns off the precharge relay section.

This configuration allows the control section to make a precharge completion determination in a case where the temperature of the PTC thermistor is higher than the Curie temperature. Further, this configuration makes it unnecessary to add another component or circuit for precharging. Further, this configuration makes it possible to perform precharge in the shortest period of time even if there is a change in battery voltage.

The power supply device is preferably configured to further include: a discharge process section that is arranged to discharge a residual charge in the smoothing capacitor with the main relay section turned off; and a sticking determination section that is arranged to, when a capacitor voltage after the residual charge has been discharged is not less than a sticking determination threshold value, determine that a contact of the main relay section is sticking.

According to this configuration, when the capacitor voltage after the residual charge discharge process is not less than a sticking determination threshold value, the control section determines that a contact of the main relay section is sticking. This allows the control section to detect sticking abnormality in the contact of the main relay section.

The power supply device is preferably configured to further include: a calculation permissibility determination section that is arranged to, in a case where a capacitor voltage after the start of the precharge is not less than a battery voltage calculation permissibility threshold value, permit the battery voltage calculation section to calculate the battery voltage; and an abnormality determination section is arranged to, in a case where the capacitor voltage after the start of the precharge is less than the battery voltage calculation permissibility threshold value and a period of time having elapsed since the start of the precharge is longer than an abnormality determination time, determine that there is an abnormality in the battery or in the precharge circuit.

According to this configuration, in a case where the capacitor voltage after the start of the precharge is less than the battery voltage calculation permissibility threshold value and a period of time having elapsed since the start of the precharge is longer than an abnormality determination time, the control section can determine that there is an abnormality in the battery or in the precharge circuit. This makes it possible to detect the battery unconnected or reversely connected, or a failure in the precharge circuit.

BRIEF DESCRIPTION OF THE DRAWINGS

Fig. 1 is an electric circuit diagram of a power supply device according to a first embodiment of the present invention;
Fig. 2 is a graph showing a relationship between the capacitor voltage and the calculated value of a battery voltage;
Fig. 3 is a flow chart showing a precharge process of the first embodiment;
Fig. 4 is an electric circuit diagram of a power supply device according to a second embodiment of the present invention;
Fig. 5 is a graph showing a relationship among the capacitor voltage, the calculated value of a battery voltage, and the calculated value of resistance;
Fig. 6 is a graph showing the characteristic of a PTC thermistor;
Fig. 7 is a flow chart showing a precharge process of the second embodiment;
Fig. 8 is a graph showing a relationship between the capacitor voltage and the calculated value of a battery voltage;
Fig. 9 is a flow chart showing a precharge process of a third embodiment of the present invention; and
Fig. 10 is an electric circuit diagram of a conventional power supply device.

MODES FOR CARRYING OUT THE INVENTION

(First Embodiment)

An embodiment of a power supply device according to the present invention is described below with reference to Figs. 1 through 3.

As shown in Fig. 1, the power supply device includes a battery 10, a main relay section 12, a precharge circuit 13, and a control section 20. The battery is a direct-current power supply. The precharge circuit 13 is connected in parallel to the main relay section 12. The main relay section 12 is connected to the output side of the battery 10 and supplies electric power to a load 11. The load 11 is, but is not limited to, an inverter that supplies electric power to an alternating-current motor (not illustrated). The precharge circuit 13 includes a series circuit composed of a resistor 14 and a precharge relay section 15. The resistor 14 is a precharge resistor. The main relay section 12 and the precharge relay section 15 are each constituted by an electromagnetic switch (magnet switch, contactor), but may alternatively be each constituted by a static relay made of a semiconductor.

Provided between the input-side terminals of the load 11 are a smoothing capacitor 16 and a voltage sensor 17. The smoothing capacitor 16 is a high-capacity electrolytic capacitor, and the voltage sensor 17 detects the voltage of the smoothing capacitor 16. The voltage sensor 17 is connected in parallel to the smoothing capacitor 16.

The control section 20 controls the main relay section 12 and the precharge relay section 15 separately during precharge and after completion of the precharge. The control section 20 is constituted by a computer such as an ECU. The control section 20 serves as a battery voltage calculation section, a precharge completion determination section, a discharge process section, a sticking determination section, a calculation permissibility determination section, and an abnormality determination section.

Next, the working of the power supply device according to the first embodiment is described.

The control section 20 includes a ROM (not illustrated). Fig. 3 shows a flow chart showing a precharge process that is executed according to a precharge process program stored in the ROM.

As shown in Fig. 3, in step S10, the control section 20 turns off both the main relay section 12 and the precharge relay section 15, and controls the load 11 so that a process of discharging the smoothing capacitor 16 is carried out for a predetermined period of time. The predetermined period of time is set as a length of time that a residual electric charge in the smoothing capacitor 16 can be disposed of during normal time when there is no sticking abnormality in the main relay section 12 or in the precharge relay section 15.

After completing the discharge process, the control section 20 proceeds to step S12, in which the control section 20 performs a sticking abnormality determination process on the contact of the main relay section 12. In the sticking abnormality determination process, the control section 20 determines whether or not a capacitor voltage Vc detected by the voltage sensor 17 is not less than a preset sticking abnormality determination value Vcr. The sticking abnormality determination value Vcr is equivalent to a sticking determination threshold value. The voltage sensor 17 detects the capacitor voltage Vc with a control period Ts of the control section 20.

In a case where the capacitor voltage Vc is not less than the sticking abnormality determination value Vcr, the control section 20 judges that there is a residual electric charge even after the residual electric charge discharge process and determines that the contact of the main relay section 12 is sticking. In this case, the control section 20 causes a warning device (not illustrated) to give notification that the contact of the main relay section 12 is sticking. After that, the control section 20 terminates the process shown in the flow chart. On the other hand, in a case where the capacitor voltage Vc is less than the sticking abnormality determination value Vcr, the control section 20 determines that the contact of the main relay section 12 is not sticking, and proceeds to step S14.

In step S14, the control section 20 turns on the precharge relay section 15. After that, the control section 20 proceeds to step S16. The control section 20 turns on the precharge relay section 15 and, at the same time, starts counting with a timer (not illustrated).

In step S16, the control section 20 reads the latest capacitor voltage Vc, and proceeds to step S18. In step S18, the control section 20 determines whether or not the capacitor voltage Vc is not less than a threshold value Vref1. In a case where the capacitor voltage Vc is lower than the threshold value Vref1, the control section 20 excludes the capacitor voltage Vc thus read, as the capacitor voltage Vc is so low that the difference between the calculated value of a battery voltage and the actual battery voltage value is not permissible. The threshold value Vref1 is a threshold value at which a calculation of the battery voltage is started, and is a value obtained by testing or the like. It should be noted that the threshold value Vref1 is a battery voltage calculation permissibility threshold value. In a case where the capacitor voltage Vc is less than the threshold value Vref1 (NO in step S18), the control section 20 proceeds to step S20.

In step S20, the control section 20 determines whether or not time t having elapsed since the precharge relay section 15 was turned on is not greater than an abnormality determination value tr. The abnormality determination value tr is a period of time that it takes until the capacitor voltage Vc reaches the threshold value Vref1 or above in a case where the battery 10 is normally connected and the precharge circuit 13 is normal, e.g. a case where the precharge relay section 15 is not sticking. The abnormality determination value tr is a value obtained by testing or the like, and is abnormality determination time.

In a case where the elapsed time t is not greater than the abnormality determination value tr (YES in step S20), the control section 20 returns to step S16. On the other hand, in a case where elapsed time t1 exceeds the abnormality determination value tr (NO in step S20), the control section 20 determines that it takes too long until the capacitor voltage Vc exceeds the threshold value Vref1. That is, the control section 20 determines whether or not the battery 10 is unconnected, whether or not the battery 10 is connected with its cathode and anode reversed, that the precharge circuit 13 is abnormal, etc., and proceeds to step S22. In step S22, the control section 20 causes the warning device to give notification that there is an abnormality. After that, the control section 20 terminates the process shown in the flow chart.

In a case where the capacitor voltage Vc thus read is not less than the threshold value Vref1 (YES in step S18), the control section 20 proceeds to step S24.

In step S24, the control section 20 determines whether or not time Ts has elapsed since the previous reading of the capacitor voltage Vc. If the time Ts has not elapsed since the previous reading (NO in step S24), the control section 20 waits. In a case where the time Ts has elapsed since the previous reading (YES in step S24), the control section 20 proceeds to step 26, in which the control section 20 reads the latest capacitor voltage Vc.

Next, in step S28, the control section 20 calculates a battery voltage Vb.

Now, Equation (3) is described. Equation (3) is used in step S28 for calculating the battery voltage Vb. Formula (3) is derived as follows:
Let it be assumed that Vb [V] is the battery voltage and Vc [V] is the capacitor voltage. The capacitor voltage Vc [V], which is expressed by Equation(1), is a capacitor voltage Vc [V] detected t (sec) after the smoothing capacitor 16 has started to be charged from the battery 10 via the resistor 14. R [Ω] is the value of resistance of the resistor 14, and C (F) is the capacitance of the smoothing capacitor 16. Since R [Ω] and C (F) are both known, they are described in advance in the precharge process program.
[Eq. 1]

$$Vc = Vb\left(1 - e^{\left(-t/C \times R\right)}\right) \quad \cdots\cdots\cdots (1)$$

According to Euler method, the capacitor voltage Vcn at the nth control is expressed by Equation (2):
[Eq. 2]

$$Vc_n = \left(Vb - Vc_{n-1}\right) \times \frac{Ts}{C \times R} + Vc_{n-1} \quad \cdots\cdots\cdots (2)$$

where Ts is the control period $n = \frac{t}{Ts}$

Solving Equation (2) for Vb yields Equation (3):
[Eq. 3]

$$Vb = \left(Vc_n - Vc_{n-1}\right) \times \frac{C \times R}{Ts} + Vc_{n-1} \quad \cdots\cdots\cdots (3)$$

Fig. 2 shows a relationship between the battery voltage (calculated value) and the capacitor voltage Vc. It should be noted here that the battery voltage is 100 V. As shown in Fig. 2, after the start of the precharge, the capacitor voltage Vc gradually rises from the voltage value of 0, and converges to the battery voltage in a curve. In this case, the capacitor voltage Vcn-1 at the point in time n-1 and the capacitor voltage Vcn at the point in time n at which the time Ts has elapsed since the point in time n-1 are obtained. On the basis of these values, the battery voltage can be calculated according to Equation (3).

After calculating the battery voltage Vb in step S28, the control section 20 proceeds to step S30. In step S30, the control section 20 determines whether or not the potential difference (Vb-Vc) between the battery voltage Vb thus calculated and the latest capacitor voltage Vc thus read is not greater than a potential difference threshold value Vref2. The potential difference threshold value Vref2 is a first precharge completion determination threshold value. The potential difference (Vb-Vc) is a potential difference between the latest battery voltage Vb thus calculated and the latest capacitor voltage Vc detected by the voltage sensor 17, and is equivalent to a changing state quantity of the battery voltage.

In a case where the potential difference (Vb-Vc) exceeds the potential difference threshold value Vref2 (NO in step S30), the control section 20 judges that the potential difference between the capacitor voltage Vc and the battery voltage Vb is so great that the precharge is insufficient, and returns to step S24. In a case where the potential difference (Vb-Vc) is not greater than the potential difference threshold value Vref2 (YES in step S30), the control section 20 judges that the precharge is sufficient, and makes a precharge completion determination. Then, the control section 20 proceeds to step S32. In step S32, the control section 20 turns on the main relay section 12. Further, in step S34, the control section 20 turns off the precharge relay section 15. Then, the control section 20 terminates the process shown in the flow chart.

Therefore, the first embodiment can bring about the following effects (1) to (4):

(1) The power supply device includes a smoothing capacitor 16, a battery 10, a main relay section 12, a precharge circuit 13, and a control section 20. The smoothing capacitor 16 is connected in parallel to a load 11. The battery 10 supplies direct-current power to the load 11. The main relay section 12 turns on or off a circuit between the battery 10 and the smoothing capacitor 16. The precharge circuit 13 is connected in parallel to the main relay section 12, and includes a series circuit composed of a resistor 14 and a precharge relay section 15. The control section 20 executes on-off control of the main relay section 12 and the precharge relay section 15.
Further, the power supply device includes a voltage sensor 17. The voltage sensor 17 detects the capacitor voltage Vc of the smoothing capacitor 16 during precharge that is performed with the main relay section 12 turned off and the precharge relay section 15 turned on. The control section 20, serving as a battery voltage calculation section, calculates a battery voltage Vb on the basis of the capacitor voltage Vc detected by the voltage sensor 17 during the precharge, the value of resistance R of the resistor 14, etc. The control section 20, serving as a precharge completion determination section, makes a precharge completion determination on the basis of a changing state quantity of the battery voltage Vb thus calculated. The control section 20 turns off the precharge relay section 15 in accordance with the precharge completion determination.
This configuration does not require another component for precharging. That is, unlike the conventional configurations, this configuration does not require a current sensor, a dedicated voltage sensor that measures the battery voltage, or the like. This eliminates the need to add another circuit to the power supply device. Further, since the battery voltage can be calculated, the precharge can be done in the shortest period of time even if there is a change in battery voltage.

(2) The control section 20, serving as the precharge completion determination section, monitors, as the changing state quantity of the battery voltage, the potential difference between the latest battery voltage Vb calculated and the latest capacitor voltage Vc detected by the voltage sensor 17. Then, the control section 20 determines whether or not the potential difference (Vb-Vc) is not greater than a potential difference threshold value Vref2. This makes it possible to appropriately determine the completion of the precharge on the basis of the latest state of the battery voltage.

(3) The control section 20 carries out a residual charge discharge process of discharging a residual charge in the smoothing capacitor 16, with the main relay section 12 turned off. Further, after the residual charge discharge process, when the capacitor voltage Vc is not less than a sticking abnormality determination value Vcr, the control section 20 determines that the contact of the main relay section 12 is sticking. This makes it possible to detect sticking of the contact of the main relay section 12.

(4) The control section 20 determines whether or not the capacitor voltage Vc after turning on of the precharge relay section 15 is not less than a threshold value Vref1. When the capacitor voltage Vc is not less than the threshold value Vref1, the control section 20 permits the battery voltage calculation section to calculate the battery voltage. On the other hand, when the capacitor voltage Vc is lower than the threshold value Vref1, the control section 20 determines that the precharge circuit 13 is abnormal in a case where a period of time having elapsed since the start of the precharge exceeds an abnormality determination value tr. This makes it possible to detect an abnormality concerning the battery, a failure in the precharge circuit, etc.

(Second Embodiment)

Next, a power supply device of a second embodiment is described with reference to Figs. 4 through 7. In the second embodiment, the same components as those of the first embodiment are given the same reference signs, and as such, are not described here.
As shown in Fig. 4, the precharge circuit 13 includes a PTC thermistor 14A serving as a precharge resistor. Further, the precharge circuit 13 includes a static relay 15A serving as a precharge relay section, and is constituted, for example, by a series circuit of solid-state contactors. The control section 20 serves as a battery voltage calculation section, a precharge completion determination section, a discharge process section, a sticking determination section, a calculation permissibility determination section, an abnormality determination section, and a resistance value calculation section.
Next, the working of the power supply device according to the second embodiment is described.
Fig. 7 shows a flow chart showing a precharge process that is executed according to a precharge process program stored in a ROM.
The second embodiment differs from the first embodiment in that the former has step S27 added between steps S26 and S28 of the flow chart. Steps S10 to S26 and S28 to S34 are the same as those of the first embodiment, and as such, are not described here.
In step S27, the control section 20 calculates the value of resistance of the PTC thermistor 14A according to Equation (6). Equation (6) is derived from Equations (1), (2), (4), and (5). The capacitor voltage $Vc_{n-1}$ at the (n-1)th control is expressed by Equation (4):

[Eq. 4]

$$Vc_{n-1} = (Vb - Vc_{n-2}) \times \frac{Ts}{C \times R} + Vc_{n-2} \qquad \cdots\cdots\cdots (4)$$

Subtracting Equation (4) from Equation (2) yields Equation (5):
[Eq. 5]

$$\begin{aligned} \Delta Vc_n &= (Vc_{n-2} - Vc_{n-1}) \times \frac{Ts}{C \times R} + \Delta Vc_{n-1} \\ &= \Delta Vc_{n-1}\left(1 - \frac{Ts}{C \times R}\right) \end{aligned} \qquad \cdots\cdots\cdots (5)$$

where $\Delta Vc_n = Vc_n - Vc_{n-1}$,
**[0052]** Solving Equation 5 for the resistance value R yields Equation (6):
[Eq. 6]

$$R = \frac{Ts}{C} \times \frac{\Delta Vc_{n-1}}{\Delta Vc_{n-1} - \Delta Vc_n} \qquad \cdots\cdots\cdots (6)$$

Fig. 5 is a graph whose horizontal axis represents time and whose vertical axis represents voltage value and resistance value (calculated value), and shows a relationship among capacitor voltage (measured value), resistance value (calculated value), and battery voltage (calculated value). In Fig. 5, for convenience of explanation, the resistance value is indicated by a straight line. However, due to the characteristics of the PTC thermistor, the resistance value changes with increase in temperature as shown in Fig. 6.
In step S28, the control section 20 uses, as R of Equation (3) for calculating the battery voltage Vb, the resistance value R calculated according to Equation (6).
In the second embodiment, even with the residual charge discharge process carried out in step S10, a rise in temperature of the PTC thermistor 14A causes a reduction in precharge current that flows through the precharge circuit 13, so that overheating is suppressed. Further, even if the PTC thermistor 14A has a high temperature, the precharge is executed in step S30 until the potential difference (Vb-Vc) becomes not greater than the potential difference threshold value Vref2. Further, the precharge can be done in the shortest period of time even if there is a change in battery voltage.
Therefore, in addition to the effects (1) to (4) of the first embodiment, the second embodiment can bring about the following effect (5):

(5) The precharge circuit 13 includes a PTC thermistor 14A, and the control section 20 calculates the value of resistance of the PTC thermistor 14A on the basis of the capacitor voltage Vc detected by the voltage sensor 17. Further, the control section 20 calculates the battery voltage on the basis of the calculated value of resistance of the PTC thermistor and the capacitor voltage Vc detected by the voltage sensor 17.

According to the foregoing configuration, turning on and off the static relay 15A repeatedly causes a precharge current to flow frequently, so that there is a rise in temperature of the PTC thermistor 14A. This causes an increase in resistance of the PTC thermistor 14A, and the increase in turn makes the electric current lower, so that overheating of the PTC thermistor 14A is suppressed. This prevents damage to the precharge resistor of the precharge circuit 13. Further, the precharge can be done even if the PTC thermistor has a high temperature.

(Third Embodiment)

Next, a power supply device of a third embodiment is described with reference to Figs. 4, 6, 8, and 9. In the third embodiment, the same components as those of the second embodiment are given the same reference signs, and as such, are not described here. The precharge process program of the third embodiment is different from that of the second embodiment. Further, although the third embodiment uses the PTC thermistor 14A as a precharge resistor, the PTC thermistor 14A is used in a range of temperatures not higher than the Curie temperature of Fig. 6. As shown in Fig. 6, the value of resistance of the PTC thermistor 14A rises sharply in the range of temperatures higher than the Curie temperature, but is comparatively stable in the range of temperatures not higher than the Curie temperature. In the third embodiment, the precharge resistor takes on a resistance value falling within the range of comparatively stable resistance values. The control section 20 serves as a battery voltage calculation section, a precharge completion determination section, a discharge process section, a sticking determination section, a calculation permissibility determination section, and an abnormality determination section.

Next, the working of the power supply device according to the third embodiment is described.

Fig. 9 shows a flow chart showing a precharge process that is executed according to the precharge process program, which is stored in a ROM.

In the third embodiment, steps S40 to S48 are executed instead of steps S27 to S30 of the second embodiment.

In step S40, the control section 20 calculates, according to Equation (7), a battery voltage $Vbe_n$ to be calculated at the nth control. In Equation (7), Rc [Ω] is the value of resistance of the PTC thermistor 14A at the Curie temperature, and C (F) is the capacitance of the smoothing capacitor 16. Since R [Ω] and C (F) are both known, they are described in advance in the precharge process program.

Equation (7) is an equation derived by replacing the resistance value R in Equation (3) with the value of resistance Rc of the PTC thermistor at the Curie temperature.

[Eq. 7]

$$Vbe_n = (Vc_n - Vc_{n-1}) \times \frac{C \times Rc}{Ts} + Vc_{n-1} \qquad \cdots\cdots\cdots (7)$$

After step S40, the control section 20 proceeds to step S42, in which the control section 20 calculates a difference ΔVbe that is a change in battery voltage Vbe over time. Then, the control section 20 determines whether or not ΔVbe is less than 0. The difference ΔVbe, obtained by subtracting the present value of the battery voltage Vbe from the previous value of the battery voltage Vbe, is equivalent to a changing state quantity of the battery voltage.

Now, the difference ΔVbe between battery voltages Vbe is described.

Let it be assumed that R is the actual value of resistance of the PTC thermistor 14A. Then, if the resistance value R is smaller than the value of resistance Rc of the PTC thermistor 14A at the Curie temperature, the calculated value of the battery voltage $Vbe_n$ is larger than the actual battery voltage Vb. On the other hand, if the actual value of resistance R of the PTC thermistor 14A is larger than the value of resistance Rc of the PTC thermistor 14A at the Curie temperature, the calculated value of the battery voltage $Vbe_n$ is smaller than the actual battery voltage Vb.

However, the battery voltage $Vbe_n$ converges to the actual battery voltage Vb with the passage of time. For this reason, the difference ΔVbe between battery voltages Vbe can be calculated according to Equation (8):

[Eq. 8]

$$\Delta Vbe = Vbe_n - Vbe_{n-1} \qquad \cdots\cdots\cdots (8)$$

The sign of the difference ΔVbe shows the magnitude of the actual value of resistance R of the PTC thermistor 14A with respect to the value of resistance Rc of the PTC thermistor 14A at the Curie temperature and, at the same time, shows the temperature of the PTC thermistor with respect to the Curie temperature.

Specifically, under the following conditions A to C, the sign of the difference ΔVbe shows the following:

(Condition A: Case where ΔVbe>0; see A of Fig. 8)

R>Rc, and the temperature of the PTC thermistor is lower than the Curie temperature.

(Condition B: Case where ΔVbe=0; see B of Fig. 8)

R=Rc, and the temperature of the PTC thermistor is equal to the Curie temperature.

It should be noted here that the value of "0" is equivalent to the second precharge completion determination threshold value.

(Condition C: Case where $\Delta Vbe<0$ (case where the sign is negative); see C of Fig. 8)

R<Rc, and the temperature of the PTC thermistor is not lower than the Curie temperature.

Now back to the flow chart, under the condition A or B (NO in step S42), the control section 20 proceeds to step S44, in which the control section 20 determines whether or not a preset precharge time (i.e. a reference precharge time) has elapsed. The precharge time is a period of time having elapsed since the static relay 15A was turned on in step S14, and is measured by a timer (not illustrated). The control section 20 makes a comparison between the time measured by the timer and the reference precharge time. In a case where the precharge time is not longer than the reference precharge time (NO in step S44), the control section 20 returns to step S24. In a case where the the precharge time is longer than the reference precharge time (YES in step S44), the control section 20 proceeds to step S32.

Meanwhile, under the condition C (YES in step S42), the control section 20 proceeds to step S46, in which the control section 20 turns off the static relay 15A. After step S46, the control section 20 proceeds to step S48. In step S48, the control section 20 causes the warning device to give notification that there is an abnormality. After that, the control section 20 terminates the process shown in the flow chart.

Therefore, in addition to the effects (1) to (4) of the first embodiment, the third embodiment can bring about the following effect (6):

(6) The precharge circuit 13 includes a PTC thermistor 14A serving as a precharge resistor. The control section 20, serving as a battery voltage calculation section, calculates a battery voltage $Vbe_n$ on the basis of the value of resistance Rc of the PTC thermistor 14A at the Curie temperature and the capacitor voltage Vc detected by the voltage sensor 17. The control section 20, serving as a precharge completion determination section, calculates, as a changing state quantity, a calculated difference ($\Delta Vbe$) between battery voltages. Then, in a case where the control section 20 determines, on the basis of a result of a comparison between the calculated difference $\Delta Vbe$ and a second precharge completion determination threshold value (0) derived from the Curie temperature, that the temperature of the PTC thermistor is not lower than the Curie temperature, the control section 20 makes a precharge completion determination and turns off the static relay 15A. In a case where a precharge completion determination is not made, the control section 20 determines whether or not a period of time having elapsed since the start of the precharge is longer than the reference precharge time. In a case where the elapsed time is longer than the reference precharge time, the control section 20 turns on the main relay section 12 and turns off the static relay 15A. This configuration allows the control section 20 to make a precharge completion determination in a case where the PTC thermistor has a higher temperature than the Curie temperature. Further, this configuration does not require another component or circuit for precharging. Further, this configuration makes it possible to perform precharge in the shortest period of time even if there is a change in battery voltage.

It should be noted that the embodiments of the present invention may be altered as follows:
In each of the embodiments described above, step S12 may be omitted.

In each of the embodiments described above, steps S20 and S22 may be omitted. In this case, in a case where the control section 20 makes a determination "NO" in step S18, the control section 20 returns to step S16.

In the second embodiment, the static relay 15A may be replaced by a contactor constituted by an electromagnetic switch, as in the first embodiment.

In the second embodiment, the PTC thermistor 14A used as the precharge resistor is a simple PTC resistor. Alternatively, a combination (series circuit or parallel circuit) of a resistor and the PTC thermistor 14A may be used. In this case, the resistance value calculated according to Equation (6) is the value of combined resistance of the resistor and the PTC thermistor.

In the third embodiment, the difference $\Delta Vbe$ obtained by subtracting the present calculated value of the battery voltage from the previous calculated value of the battery voltage is a changing state quantity of the battery voltage. Alternatively, the ratio between the previous value and the present value may be a changing state quantity. When h is "previous value/present value", the conditions A to C of the third embodiment are changed as follows:

(Condition A: Case where $h<1$; see A of Fig. 8)

R>Rc, and the temperature of the PTC thermistor is lower than the Curie temperature.

(Condition B: Case where $h=1$; see B of Fig. 8)

R=Rc, and the temperature of the PTC thermistor is equal to the Curie temperature.

It should be noted here that the value of "1" is equivalent to the second precharge completion determination threshold value.

(Condition C: Case where h>1; see C of Fig. 8)

R<Rc, and the temperature of the PTC thermistor is not lower than the Curie temperature.

This can also bring about the same effects as those of the third embodiment.

Specifically, the control section 20 needs only to calculate the ratio h in step S42 of the flow chart shown in Fig. 9 and determine whether the condition is A, B, or C.

It should be noted that the ratio h may be "present value/previous value". In this case, the condition A corresponds to a case where h>1, and the condition C corresponds to a case where h<1.

## Claims

1. A power supply device including a smoothing capacitor (16), a load (11) connected in parallel to the smoothing capacitor, a battery (10) that is arranged to supply direct-current power to the load, a main relay section (12) arranged between the battery and the smoothing capacitor, a precharge circuit connected in parallel to the main relay section, the precharge circuit including a series circuit composed of a precharge resistor (14) and a precharge relay section (15), and a control section (20) that is arranged to execute on-off control of the main relay section and the precharge relay section,
the power supply device comprising:

    a voltage sensor (17) that is arranged to detect a capacitor voltage (Vc) of the smoothing capacitor during precharge that is performed with the main relay section turned off and the precharge relay section turned on;
    a battery voltage calculation section that is arranged to calculate a battery voltage (Vb) on a basis of the capacitor voltage, a value of resistance of the precharge resistor and a value of capacitance of the smoothing capacitor; and
    a precharge completion determination section that, on a basis of a changing state quantity of the battery voltage, is arranged to make a precharge completion determination,
    wherein the control section is arranged to turn off the precharge relay section in accordance with the precharge completion determination made by the precharge completion determination section.

2. The power supply device according to claim 1, wherein:

    the precharge completion determination section is arranged to monitor, as the changing state quantity of the battery voltage (Vb), a potential difference (Vb-Vc) between a latest battery voltage calculated and a latest capacitor voltage (Vc) detected by the voltage sensor (17); and
    the precharge completion determination section is arranged to determine whether or not the potential difference is not greater than a first precharge completion determination threshold value.

3. The power supply device according to claim 2, wherein
the precharge circuit (13) includes a PTC thermistor (14a),
the power supply device further comprises a resistance value calculation section that is arranged to calculate a value of resistance of the PTC thermistor on a basis of a capacitor voltage (Vc) detected by the voltage sensor (17), and the battery voltage calculation section is arranged to calculate the battery voltage (Vb) on a basis of a precharge resistor (14) including the value of resistance of the PTC thermistor and the capacitor voltage detected by the voltage sensor.

4. The power supply device according to claim 1, wherein:

    the precharge resistor (14) is a PTC thermistor (14a);
    the battery voltage calculation section is arranged to calculate the battery voltage (Vb) on a basis of a value of resistance of the PTC thermistor at a Curie temperature and a capacitor voltage detected by the voltage sensor;
    the precharge completion determination section is arranged to calculate, as the changing state quantity, either a difference obtained by subtracting a present value of the battery voltage as calculated by the battery voltage calculation section from a previous value of the battery voltage as calculated by the battery voltage calculation section or a ratio between the previous value and the present value, and to make the precharge completion determination in a case where the precharge completion determination section determines, on a basis of a result of a comparison between the changing state quantity and a second precharge completion determination threshold value derived from the Curie temperature, that a temperature of the PTC thermistor is not lower than the Curie temperature;

the control section (20) is arranged to turn off the precharge relay section (15) in accordance with the precharge completion determination; and
in a case where the precharge completion determination is not made and a period of time elapsed since a start of the precharge is longer than a preset precharge time, the control section is arranged to turn on the main relay section and to turn off the precharge relay section.

**5.** The power supply device according to any one of claims 1 to 4, further comprising:

a discharge process section that is arranged to discharge a residual charge in the smoothing capacitor (16) with the main relay section (12) turned off; and
a sticking determination section that is arranged to, when a capacitor voltage (Vc) after the residual charge has been discharged is not less than a sticking determination threshold value, determine that a contact of the main relay section is sticking.

**6.** The power supply device according to any one of claims 1 to 5, further comprising:

a calculation permissibility determination section that is arranged to, in a case where a capacitor voltage (Vc) after the start of the precharge is not less than a battery voltage calculation permissibility threshold value, permit the battery voltage calculation section to calculate the battery voltage (Vb); and
an abnormality determination section that is arranged to, in a case where the capacitor voltage after the start of the precharge is less than the battery voltage calculation permissibility threshold value and a period of time elapsed since the start of the precharge is longer than an abnormality determination time, determines that there is an abnormality in the battery or in the precharge circuit.

## Patentansprüche

**1.** Leistungsversorgungsvorrichtung, die einen Glättungskondensator (16), eine Last (11), die parallel mit dem Glättungskondensator verbunden ist, eine Batterie (10), die dazu eingerichtet ist, eine Gleichstromleistung an die Last zu liefern, einen Hauptrelaisabschnitt (12), der zwischen der Batterie und dem Glättungskondensator angeordnet ist, einen Vorladeschaltkreis, der parallel zu dem Hauptrelaisabschnitt verbunden ist, beinhaltet, wobei der Vorladeschaltkreis einen Reihenschaltkreis, der aus einem Vorladewiderstand (14) und einem Vorladerelaisabschnitt (15) besteht, und einen Steuerabschnitt (20), der dazu eingerichtet ist, eine Ein-Aus-Steuerung des Hauptrelaisabschnitts und des Vorladerelaisabschnitt auszuführen, beinhaltet,
wobei die Leistungsversorgungsvorrichtung Folgendes umfasst:

einen Spannungssensor (17), der dazu eingerichtet ist, eine Kondensatorspannung (Vc) des Glättungskondensators während dem Vorladen zu detektieren, das mit dem Hauptrelaisabschnitt ausgeschaltet und dem Vorladerelaisabschnitt eingeschaltet durchgeführt wird;
einen Batteriespannungsberechnungsabschnitt, der dazu eingerichtet ist, die Batteriespannung (Vb) basierend auf der Kondensatorspannung, einem Widerstandswert des Vorladewiderstands und einem Kapazitätswert des Glättungskondensators zu berechnen; und
einen Vorladeabschlussbestimmungabschnitt, der basierend auf der Änderungszustandsquantität der Batteriespannung dazu eingerichtet ist, eine Vorladeabschlussbestimmung vorzunehmen,
wobei der Steuerabschnitt dazu eingerichtet ist, den Vorladerelaisabschnitt gemäß der Vorladeabschlussbestimmung, die durch den Vorladeabschlussbestimmungabschnitt vorgenommen wird, auszuschalten.

**2.** Leistungsversorgungsvorrichtung nach Anspruch 1, wobei:

der Vorladeabschlussbestimmungabschnitt dazu eingerichtet ist, eine Potentialdifferenz (Vb-Vc) zwischen einer letzten berechneten Batteriespannung und einer letzten Kondensatorspannung (Vc), die durch den Spannungssensor (17) detektiert wird, als die Änderungszustandsquantität der Batteriespannung (Vb) zu überwachen; und der Vorladeabschlussbestimmungabschnitt dazu eingerichtet ist, zu bestimmen, ob die Potentialdifferenz größer als ein erster Vorladeabschlussbestimmungsschwellenwert ist oder nicht.

**3.** Leistungsversorgungsvorrichtung Anspruch 2, wobei:

der Vorladeschaltkreis (13) einen PTC-Thermistor (14a) beinhaltet,

die Leistungsversorgungsvorrichtung ferner einen Widerstandswertberechnungsabschnitt umfasst, der dazu eingerichtet ist, einen Widerstandswert des PTC-Thermistors basierend auf einer Kondensatorspannung (Vc), die durch den Spannungssensor (17) berechnet wird, zu berechnen, und
der Batteriespannungsberechnungsabschnitt dazu eingerichtet ist, die Batteriespannung (Vb) basierend auf einem Vorladewiderstand (14) einschließlich des Widerstandswertes des PTC-Thermistors und der Kondensatorspannung, die durch den Spannungssensor detektiert wird, zu berechnen.

**4.** Leistungsversorgungsvorrichtung nach Anspruch 1, wobei:

der Vorladewiderstand (14) ein PTC-Thermistor (14a) ist;
der Batteriespannungsberechnungsabschnitt dazu eingerichtet ist, die Batteriespannung (Vb) basierend auf einem Widerstandswert des PTC-Thermistors bei einer Curie-Temperatur und einer Kondensatorspannung, die durch den Spannungssensor detektiert wird, zu berechnen;
der Vorladeabschlussbestimmungabschnitt dazu eingerichtet ist, als die Änderungszustandsquantität entweder eine Differenz, die durch Subtrahieren eines momentanen Wertes der Batteriespannung, wie durch den Batteriespannungsberechnungsabschnitt berechnet, von einem vorherigen Wert der Batteriespannung, wie durch den Batteriespannungsberechnungsabschnitt berechnet, oder ein Verhältnis zwischen dem vorherigen Wert und dem momentanen Wert zu berechnen und die Vorladeabschlussbestimmung vorzunehmen, falls der Vorladeabschlussbestimmungabschnitt basierend auf einem Ergebnis eines Vergleichs zwischen der Änderungszustandsquantität und einem zweiten Vorladeabschlussbestimmungsschwellenwert, der von der Curie-Temperatur abgeleitet wird, bestimmt, dass eine Temperatur des PTC-Thermistors nicht niedriger als die Curie-Temperatur ist;
der Steuerabschnitt (20) dazu eingerichtet ist, den Vorladerelaisabschnitt (15) gemäß der Vorladeabschlussbestimmung auszuschalten; und
der Steuerabschnitt dazu eingerichtet ist, falls die Vorladeabschlussbestimmung nicht vorgenommen wird und eine seit einem Beginn des Vorladens verstrichene Zeitperiode länger als eine voreingestellte Vorladezeit ist, den Hauptrelaisabschnitt einzuschalten und den Vorladerelaisabschnitt auszuschalten.

**5.** Leistungsversorgungsvorrichtung nach einem der Ansprüche 1 bis 4, die ferner Folgendes umfasst:

einen Entladeprozessabschnitt, der dazu eingerichtet ist, eine Restladung in dem Glättungskondensator (16) mit dem Hauptrelaisabschnitt (12) ausgeschaltet zu entladen; und
einen Haftbestimmungsabschnitt, der dazu eingerichtet ist, wenn eine Kondensatorspannung (Vc) nicht niedriger als ein Haftbestimmungsschwellenwert ist, nachdem die Restladung entladen wurde, zu bestimmen, dass ein Kontakt des Hauptrelaisabschnitts haftet.

**6.** Leistungsversorgungsvorrichtung nach einem der Ansprüche 1 bis 5, die ferner Folgendes umfasst:

einen Berechnungszulässigkeitsbestimmungsabschnitt, der dazu eingerichtet ist, falls eine Kondensatorspannung (Vc) nach dem Beginn des Vorladens nicht niedriger als ein Batteriespannungsberechnungszulässigkeitsschwellenwert ist, zuzulassen, dass der Batteriespannungsberechnungsabschnitt die Batteriespannung (Vb) berechnet; und
einen Abnormalitätsbestimmungsabschnitt, der dazu eingerichtet ist, falls die Kondensatorspannung nach dem Beginn des Vorladens niedriger als der Batteriespannungsberechnungszulässigkeitsschwellenwert ist und eine seit dem Beginn des Vorladens verstrichene Zeitperiode länger als eine Abnormalitätsbestimmungszeit ist, zu bestimmen, dass es eine Abnormalität in der Batterie oder in dem Vorladeschaltkreis gibt.

## Revendications

**1.** Dispositif d'alimentation en énergie comprenant un condensateur de filtrage (16), une charge (11) raccordée en parallèle au condensateur de filtrage, une batterie (10) qui est conçue pour fournir de la puissance en courant continu à la charge, une section de relais principale (12) disposée entre la batterie et le condensateur de filtrage, un circuit de précharge raccordé en parallèle à la section de relais principale,
le circuit de précharge comprenant un circuit série composé d'une résistance de précharge (14) et d'une section de relais de précharge (15), et une unité de commande (20) qui est conçue pour exécuter une commande de mise sous tension-mise hors tension de la section de relais principale et de la section de relais de précharge,
le dispositif d'alimentation en énergie comprenant :

un capteur de tension (17) qui est conçu pour détecter une tension de condensateur (Vc) du condensateur de filtrage pendant une précharge qui est réalisée avec la section de relais principale mise hors tension et la section de relais de précharge mise sous tension ;
une section de calcul de tension de batterie qui est conçue pour calculer une tension de batterie (Vb) sur la base de la tension de condensateur, d'une valeur de résistance de la résistance de précharge et d'une valeur de capacité du condensateur de filtrage ; et
une section de détermination de fin de précharge qui, sur la base d'une quantité d'état de changement de la tension de batterie, est conçue pour réaliser une détermination de fin de précharge,
dans lequel la section de commande est conçue pour mettre hors tension la section de relais de précharge en fonction de la détermination de fin de précharge réalisée par la section de détermination de fin de précharge.

**2.** Dispositif d'alimentation en énergie selon la revendication 1, dans lequel :

la section de détermination de fin de précharge est conçue pour surveiller, en tant que quantité d'état de changement de la tension de batterie (Vb), une différence de potentiel (Vb-Vc) entre la dernière tension de batterie calculée et la dernière tension de condensateur (Vc) détectée par le capteur de tension (17) ; et
la section de détermination de fin de précharge est conçue pour déterminer si la différence de potentiel est, ou non, inférieure ou égale à une première valeur de seuil de détermination de fin de précharge.

**3.** Dispositif d'alimentation en énergie selon la revendication 2, dans lequel :

le circuit de précharge (13) comprend une thermistance à coefficient de température positif (CTP) (14a),
le dispositif d'alimentation en énergie comprend en outre une section de calcul de valeur de résistance qui est conçue pour calculer une valeur de résistance de la thermistance CTP sur la base d'une tension de condensateur (Vc) détectée par le capteur de tension (17) et
la section de calcul de tension de batterie est conçue pour calculer la tension de batterie (Vb) sur la base d'une résistance de précharge (14) comprenant la valeur de résistance de la thermistance CTP et de la tension de condensateur détectée par le capteur de tension.

**4.** Dispositif d'alimentation en énergie selon la revendication 1, dans lequel :

la résistance de précharge (14) comprend une thermistance CTP (14a) ;
la section de calcul de tension de batterie est conçue pour calculer la tension de batterie (Vb) sur la base d'une valeur de résistance de la thermistance CTP à une température de Curie et d'une tension de condensateur détectée par le capteur de tension ;
la section de détermination de fin de précharge est conçue pour calculer, en tant que quantité d'état de changement, soit une différence obtenue en soustrayant une valeur prédéfinie de la tension de batterie telle que calculée par la section de calcul de tension de batterie à partir d'une précédente valeur de la tension de batterie telle que calculée par la section de calcul de tension de batterie, soit un rapport entre la précédente valeur et l'actuelle valeur, et à réaliser la détermination de fin de précharge dans le cas où la section de détermination de fin de précharge détermine, sur la base d'un résultat d'une comparaison entre la quantité d'état de changement et une seconde valeur de seuil de détermination de fin de précharge dérivée de la température de Curie, qu'une température de la thermistance CTP est supérieure ou égale à la température de Curie ;
la section de commande (20) est conçue pour mettre hors tension la section de relais de précharge (15) en fonction de la détermination de fin de précharge ; et
dans le cas où la détermination de fin de précharge n'est pas réalisée et où une période de temps écoulée depuis le début de la précharge est plus longue qu'un temps de précharge prédéfini, la section de commande est conçue pour mettre sous tension la section de relais principale et pour mettre hors tension la section de relais de précharge.

**5.** Dispositif d'alimentation en énergie selon l'une quelconque des revendications 1 à 4, comprenant en outre :

une section de traitement de décharge qui est conçue pour décharger une charge résiduelle dans le condensateur de filtrage (16), la section de relais principale (12) étant mise hors tension ; et
une section de détermination d'adhérence qui est conçue, lorsqu'une tension de condensateur (Vc) après que la charge résiduelle a été déchargée, est supérieure ou égale à une valeur de seuil de détermination d'adhérence, pour déterminer qu'un contact de la section de relais principale adhère.

**6.** Dispositif d'alimentation en énergie selon l'une quelconque des revendications 1 à 5, comprenant en outre :

une section de détermination de permissibilité de calcul qui est conçue, dans le cas où une tension de condensateur (Vc) après le début de la précharge est supérieure ou égale à une valeur de seuil de permissibilité de calcul de tension de batterie, pour permettre à la section de calcul de tension de batterie de calculer la tension de batterie (Vb) ; et

une section de détermination d'anomalie qui est conçue, dans le cas où la tension de condensateur après le début de la précharge est inférieure à la valeur de seuil de permissibilité de calcul de tension de batterie et où une période de temps écoulée depuis le début de la précharge est plus longue qu'un temps de détermination d'anomalie, pour déterminer qu'il y a une anomalie dans la batterie ou dans le circuit de précharge.

**Fig.1**

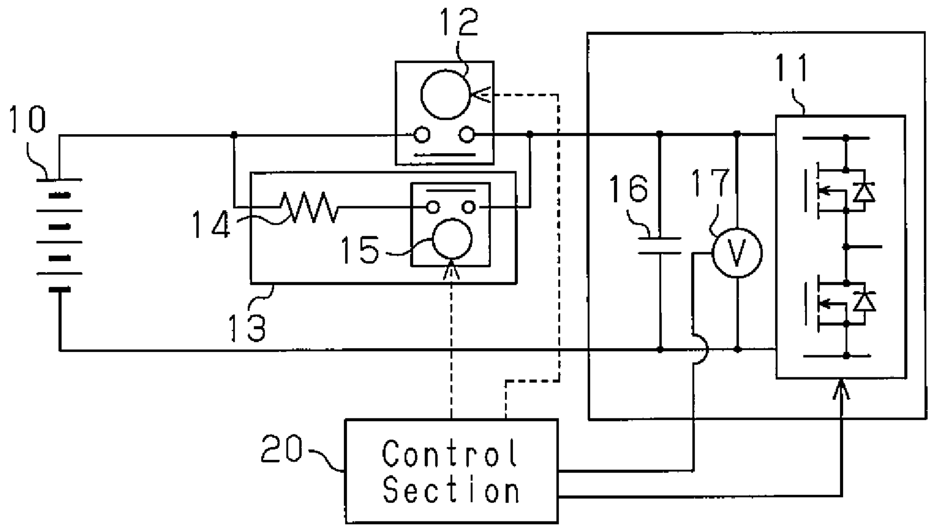
12
11
10
16
17
V
14
15
13
20
Control Section

**Fig.2**

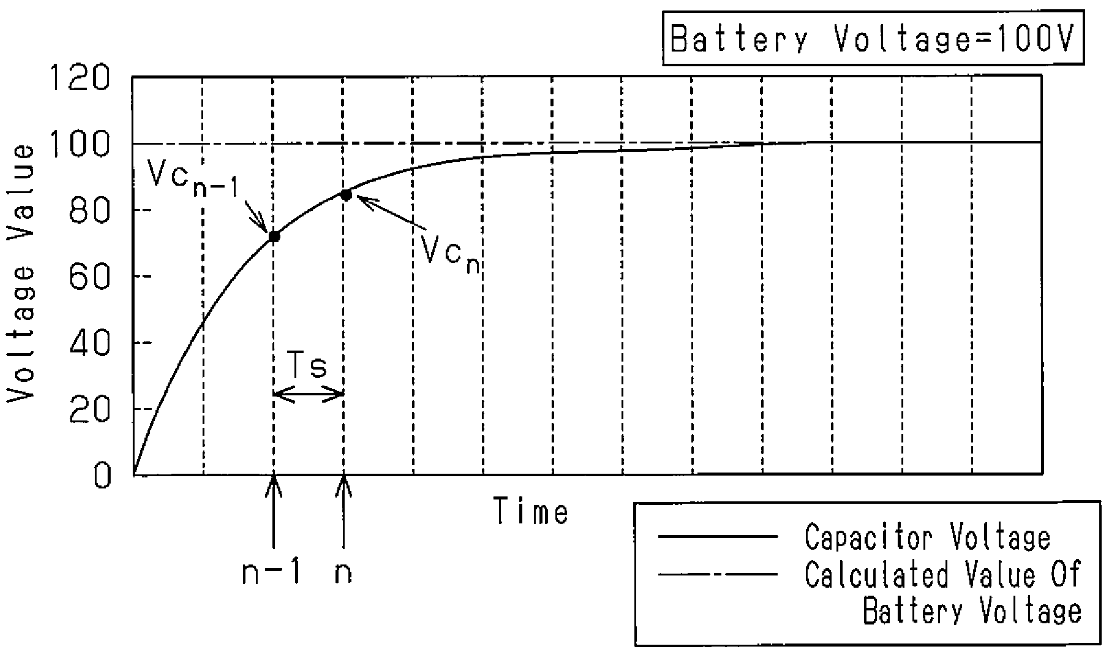
Battery Voltage=100V
120
100
80
60
40
20
0
Voltage Value
Vc n-1
Vc n
Ts
n-1
n
Time
Capacitor Voltage
Calculated Value Of Battery Voltage

Fig.3

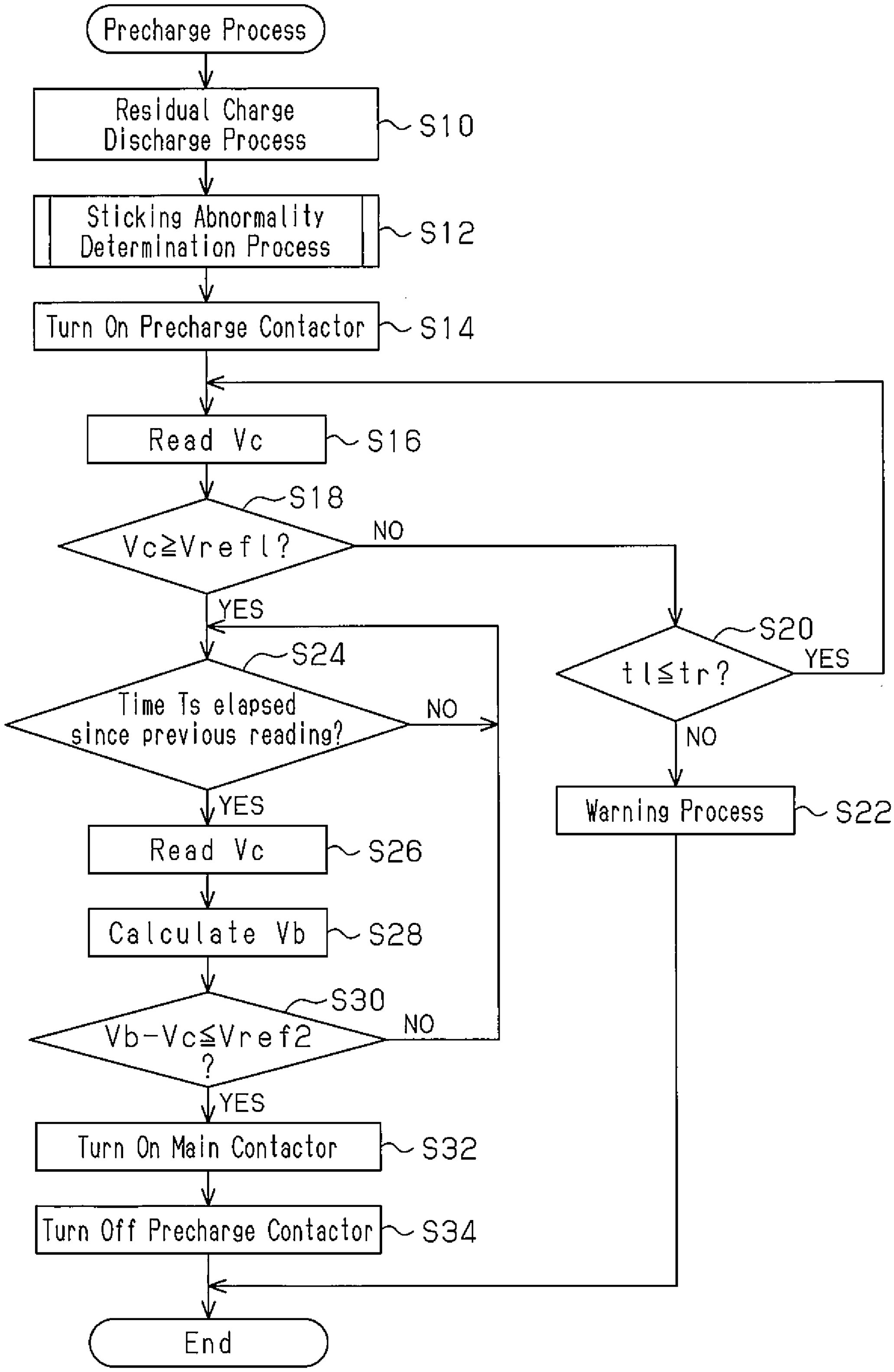
Precharge Process
Residual Charge Discharge Process
S10
Sticking Abnormality Determination Process
S12
Turn On Precharge Contactor
S14
Read Vc
S16
S18
Vc≧Vref1?
NO
YES
S20
tl≦tr?
YES
NO
Warning Process
S22
S24
Time Ts elapsed since previous reading?
NO
YES
Read Vc
S26
Calculate Vb
S28
S30
Vb−Vc≦Vref2?
NO
YES
Turn On Main Contactor
S32
Turn Off Precharge Contactor
S34
End

# Fig.4

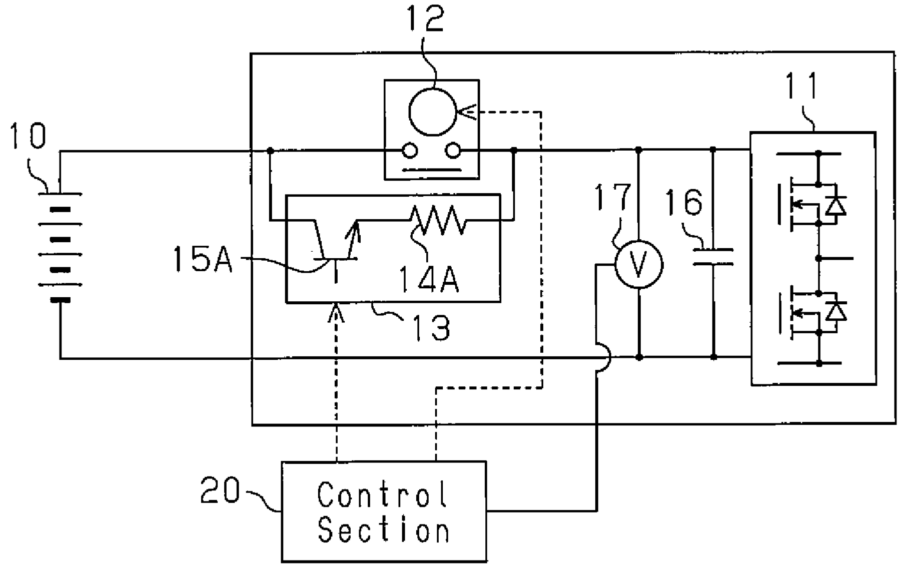
12
11
10
17
16
15A
14A
13
V
20
Control Section

# Fig.5

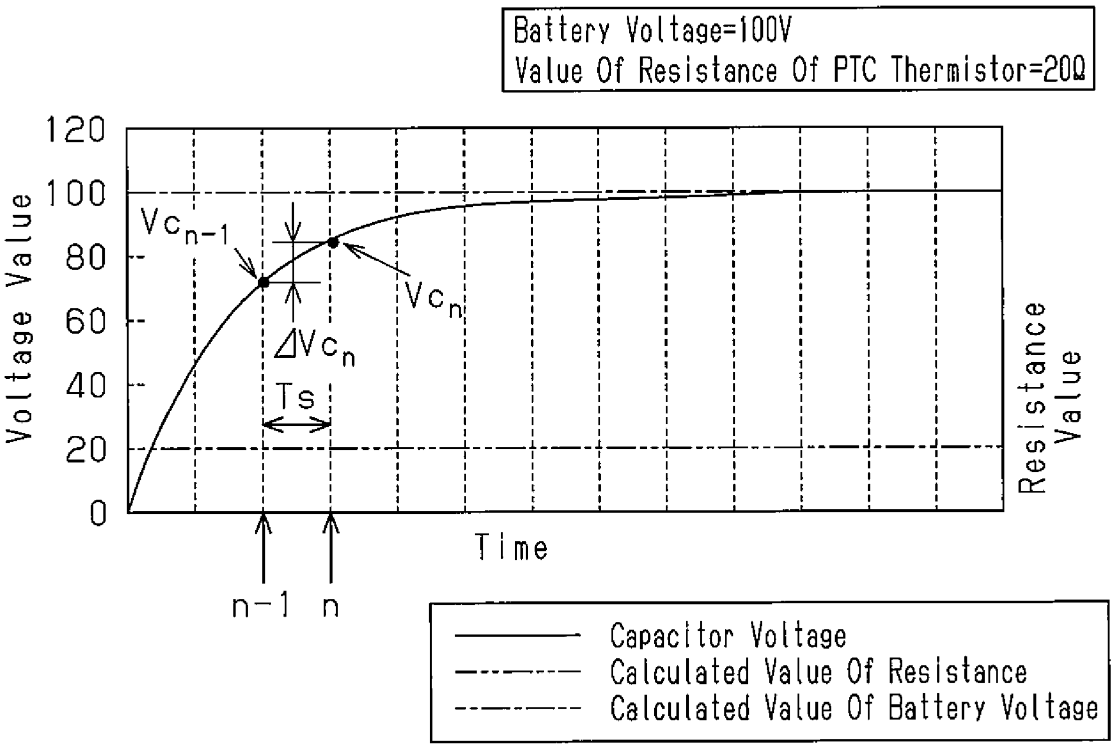
Battery Voltage=100V
Value Of Resistance Of PTC Thermistor=20Ω
120
100
80
60
40
20
0
Voltage Value
Resistance Value
Vc n-1
Vc n
ΔVc n
Ts
Time
n-1
n
Capacitor Voltage
Calculated Value Of Resistance
Calculated Value Of Battery Voltage

Fig.6

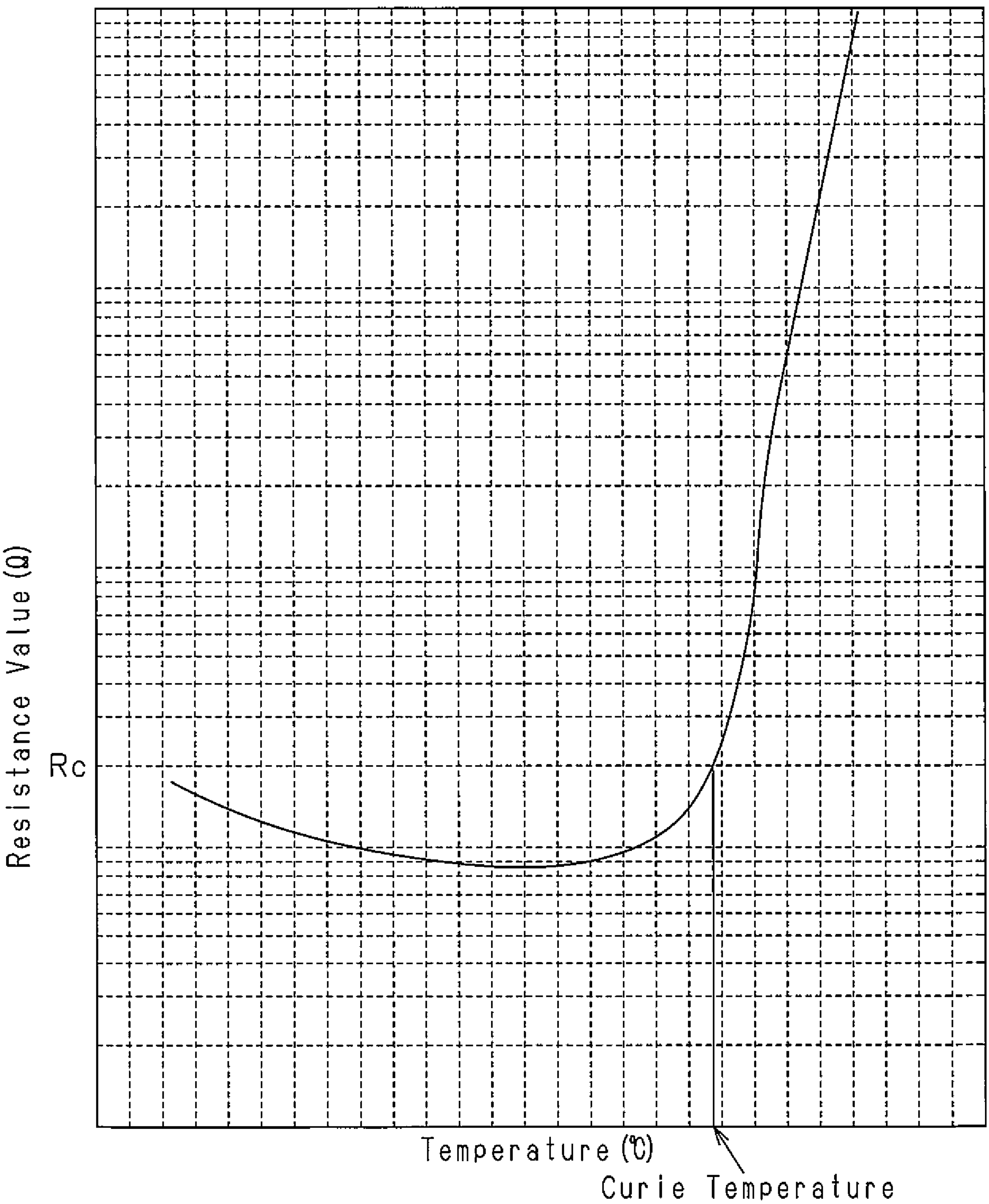

**Fig.7**

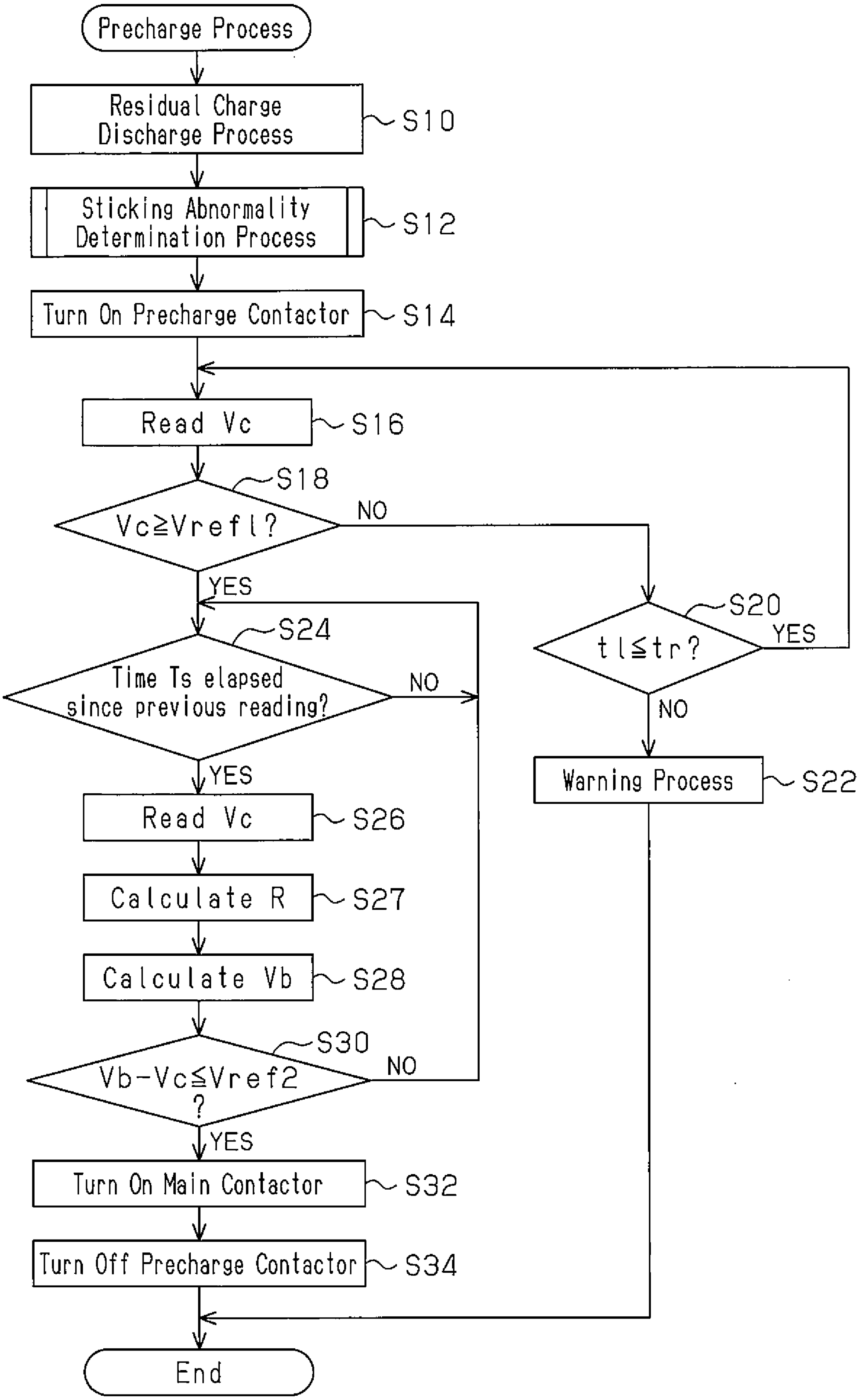
Precharge Process
Residual Charge Discharge Process
S10
Sticking Abnormality Determination Process
S12
Turn On Precharge Contactor
S14
Read Vc
S16
S18
Vc≧Vref1?
NO
YES
S20
t1≦tr?
YES
NO
Warning Process
S22
S24
Time Ts elapsed since previous reading?
NO
YES
Read Vc
S26
Calculate R
S27
Calculate Vb
S28
S30
Vb-Vc≦Vref2 ?
NO
YES
Turn On Main Contactor
S32
Turn Off Precharge Contactor
S34
End

# Fig.8

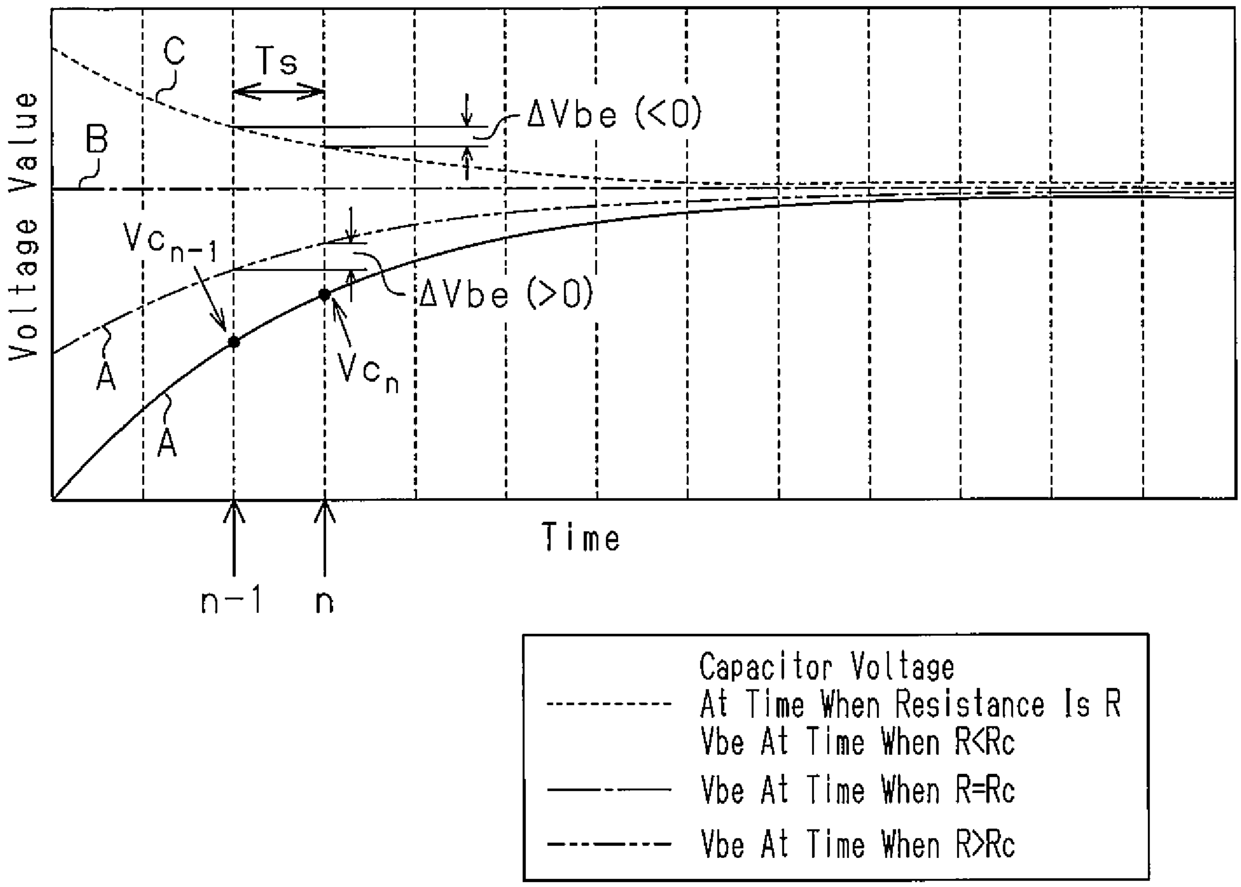

Voltage Value
C
Ts
ΔVbe (<0)
B
Vc n-1
ΔVbe (>0)
A
Vc n
A
Time
n-1
n
Capacitor Voltage
At Time When Resistance Is R
Vbe At Time When R<Rc
Vbe At Time When R=Rc
Vbe At Time When R>Rc

**Fig.9**

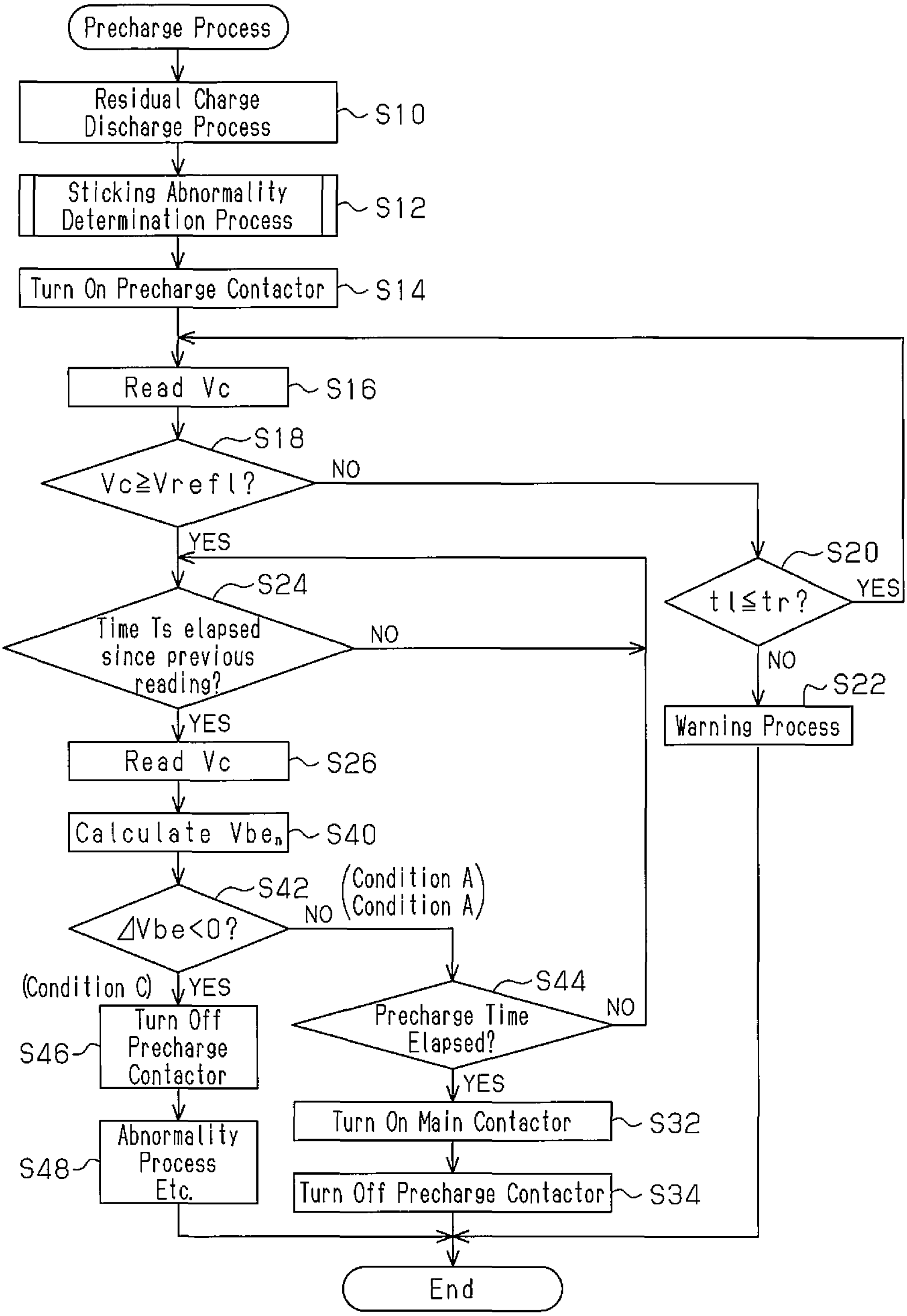
Precharge Process
Residual Charge Discharge Process
S10
Sticking Abnormality Determination Process
S12
Turn On Precharge Contactor
S14
Read Vc
S16
S18
Vc≧Vrefl?
NO
YES
S20
tl≦tr?
YES
NO
S22
Warning Process
S24
Time Ts elapsed since previous reading?
NO
YES
Read Vc
S26
Calculate Vbe
S40
S42
(Condition A)
(Condition A)
NO
∆Vbe<0?
(Condition C)
YES
Turn Off Precharge Contactor
S46
S44
Precharge Time Elapsed?
NO
YES
Turn On Main Contactor
S32
Abnormality Process Etc.
S48
Turn Off Precharge Contactor
S34
End

# Fig.10

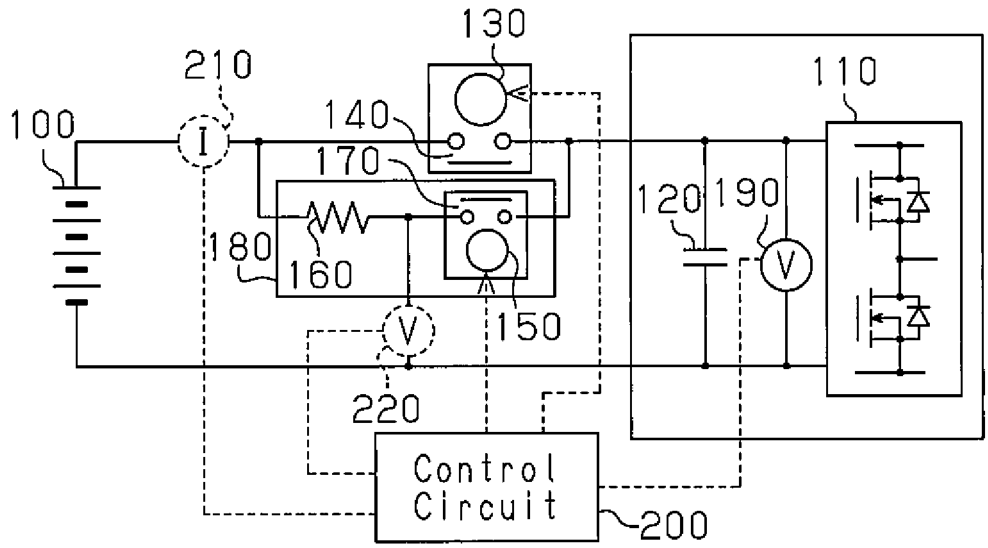

130
210
110
100
140
170
120
190
V
I
180
160
150
V
220
Control Circuit
200

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10304501 A
- JP 3736933 B
- JP 2008193846 A